**Europäisches Patentamt**

**European Patent Office**

**Office européen des brevets**

(19)

(11) Veröffentlichungsnummer: **0 137 888**
**B1**

(12) # EUROPÄISCHE PATENTSCHRIFT

(45) Veröffentlichungstag der Patentschrift:
**17.11.88**

(21) Anmeldenummer: **84103278.2**

(22) Anmeldetag: **24.03.84**

(51) Int. Cl.⁴: **B 29 C 45/20**, B 29 C 45/27, B 29 C 45/30

(54) **Spritzgiessvorrichtung.**

(30) Priorität: **18.10.83 DE 3337803**

(43) Veröffentlichungstag der Anmeldung:
**24.04.85 Patentblatt 85/17**

(45) Bekanntmachung des Hinweises auf die Patenterteilung:
**17.11.88 Patentblatt 88/46**

(84) Benannte Vertragsstaaten:
**AT BE CH DE FR GB IT LI LU NL SE**

(56) Entgegenhaltungen:
**DE - A - 2 716 950**
**DE - A - 3 301 272**
**GB - A - 2 095 161**
**NL - A - 7 900 927**
**US - A - 3 091 812**
**US - A - 3 520 026**

(73) Patentinhaber: **Günther, Herbert, Dipl.-Ing.,**
**Unterauestrasse 14, D-3559 Allendorf/Eder (DE)**

(72) Erfinder: **Günther, Herbert, Dipl.-Ing.,**
**Unterauestrasse 14, D-3559 Allendorf/Eder (DE)**

(74) Vertreter: **Olbricht, Karl Heinrich, Dipl.-Phys., Am**
**Weinberg 15, D-3556 Niederweimar (DE)**

**Beschreibung**

Die vorliegende Erfindung betrifft eine Vorrichtung gemäss dem Oberbegriff von Anspruch 1 zum Heisskanal- Spritzgiessverfahren. Eine solche Vorrichtung ist aus US-A-3 520 026 bekannt.

Zum Heisskanal-Spritzgiessen hat man gemäss der US-A-3 091 812 ein direkt bewickeltes Heizrohr benutzt, das von einer Isoliermasse umgeben ist. Eine über die Länge der Heisskanal-Düse und des zugehörigen Verteilers reichende gleichmässige Temperaturführung ist mit dieser Spritzgiessvorrichtung allerdings kaum und jedenfalls nicht reproduzierbar möglich, schon weil es an Regeleinrichtungen fehlt und das Heizrohr daher zumindest stellenweise Übertemperaturen annehmen kann, vor allem in seinem mittleren Bereich.

In der US-A-3 520 026 ist eine Heisskanal-Spritzgiessvorrichtung beschrieben, die für die Aussenhaut von Torpedos oder Pinolen eine Widerstandsheizung aufweist, und zwar eine innere Elektrode von niedrigem spezifischem Widerstand und grösserem Querschnitt sowie eine äussere dünne Elektrode von höherem spezifischen Widerstand. Um ohne Kurzschluss durch die Form den z.B. aus rostfreiem Stahl oder einer Chromnickel-Legierung bestehenden Angussverteiler selbst als elektrisches Heizelement benutzen zu können, sind Isolator- Abstandsstücke und Luftspalte vorgesehen. Das System ermöglicht zwar Energieeinsparungen, doch tritt insbesondere an der Spitze des Torpedos und am Übergang zum Verteiler ein hoher Temperaturabfall gegenüber dem mittleren Stück des Kanals auf. Zur Verarbeitung hochviskoser Thermoplaste mit grosser Einspritzgeschwindigkeit und hohen Drücken eignet sich die bekannte Vorrichtung nur bei sehr kurzer Ausbildung der Torpedos.

Verteiler einer anderen Bauart sind aus der DE-A-2 938 832 bekannt, die sich hauptsächlich mit einem Baukasten-Heisskanalsystem befasst. Dessen einzelne Heizleiter sind unabhängig voneinander elektrisch steuerbar, um die Kunststoffschmelze in verschiedenen Bereichen des Heisskanalsystems thermisch unterschiedlich zu beeinflussen. Hierbei ist eine konische Bohrung zur Druckanpassung vorgesehen, die sich in der Praxis jedoch als an den verschiedenen Anspritzpunkten zumindest teilweise unwirksam herausgestellt hat.

Durch die neueren temperaturempfindlichen Thermoplaste sind die Anforderungen an ein Heisskanalsystem bezüglich der Temperatur-Führung noch gewachsen. An jedem Ort des fliessenden Kunststoffes soll die gleiche, einstellbare Temperatur vorhanden sein; durch die Berührung des Heisskanalsystems mit dem kalten Werkzeug wird jedoch das Temperatur-Gleichgewicht des Heisskanalsystems gestört. Daraus ergibt sich das Bedürfnis, die ungewollte Wärmeabfuhr im Anlagebereich von Düse und Verteiler am Werkzeug durch sinnvolle bauliche Massnahmen zu korrigieren. Überdies ist ein niedriger Energieverbrauch nicht nur wirtschaftlich wünschenswert, sondern auch technisch notwendig, um den Wärmehaushalt des Werkzeugs nicht unnötig zu belasten.

Hauptaufgabe der Erfindung ist es demgemäss, unter Überwindung der Nachteile des Standes der Technik mit einfachen Mitteln ein Heisskanalsystem mit Aussenbeheizung der zu verarbeitenden Spritzgiessmasse zu schaffen, das energiesparend zu betreiben ist. Es soll im Produktionsbetrieb tunlichst ohne Zusatzheizung auskommen, so dass im wesentlichen nur für die Anfahr-Phase Heizenergie benötigt wird. Ferner soll die Temperatur-Beeinflussung des Werkzeugs möglichst gering sein; die äusseren Bauteile sollen im Betrieb nahezu Werkzeugtemperatur haben, um Wärmedehnungsprobleme zu vermeiden bzw. beherrschbar zu machen. Wichtig ist auch eine Vergleichmässigung des Temperaturniveaus an jeder Stelle des Heizsystems, um Störungen des Gleichgewichts bei der Kunststoff-Verarbeitung auszuschliessen oder zumindest weitgehend abzubauen.

Grundlegende Merkmale der Erfindung sind in Anspruch 1 angegeben. Ausgestaltungen sind Gegenstand der Ansprüche 2 bis 20.

Das Prinzip der Erfindung beruht darauf, dass die zugeführte Heizleistung zu einer Wärmekonzentration an den Enden der Düse bzw. des Torpedos gebracht wird, während in dem Bereich dazwischen Massnahmen zur dosierten Wärmeabfuhr bzw. zur Isolierung nach aussen und/oder zum Temperaturausgleich im Inneren vorgenommen werden.

Bei einer Vorrichtung der eingangs genannten Art werden erfindungsgemäss Heizrohre verwendet, die an ausgewählten Stellen radial abgestützt sind, um Wärmedehnungen zuzulassen, eine begrenzte Wärmeabfuhr zu bewirken und/oder einen Wärmeübergang weitestgehend zu unterbinden. Durch abgestufte Heizleistungszufuhr und darauf abgestimmte Dämmungs-Massnahmen, beispielsweise indem Isoliermassen unterschiedlichen Wärmeleitwertes vorhanden sind, wird eine gleichmässige Temperaturverteilung über die Länge der Düse und/oder entlang des Heizleiters mit der gewünschten Wärmekonzentration am Düseneinlauf bzw. Materialeintritt und an der Düsenspitze kombiniert. Die zugeführte Heizleistung wird durch Durchmesser- und Querschnittsbemessung oder -abstufung, durch Werkstoffwahl von Heizleitern bzw. Heizleiter-Abschnitten oder Isoliermassen und/oder durch Isolier-Abstützungen an ausgewählten Stellen gleichmässig und bedarfsgerecht verteilt. Durch geeignete Abstützungen können auch die von der Kunststoffströmung ausgehenden Axialkräfte sicher aufgenommen werden.

Zwar wurde in der DE-C-2 208 797 bereits vorgeschlagen, bei einer Spritzgiessform für einen verschieblichen Ventilkörper radiale Abstützungen vorzusehen, die an der Innenfläche eines zylindrischen Zuführkanals gleitend geführt sind. Diese Abstützungen sind jedoch aus Metall und mithin wärmeleitend, so dass die thermische Isolierung durchbrochen wird. Ferner sind Stege zum Halten von Torpedos aus der DE-C-2 857 129 an sich bekannt. Zum Zwecke des Dehnungsausgleichs musste dabei aber die gesamte Axialkraft, die von den Strömungskräften der Kunststoffmasse herrührt, nur mit der Hälfte der Stege übertragen werden.

Eine wichtige Ausgestaltung der Erfindung ist es, die inneren, unter hohem Druck stehenden Düsenteile, Thermofühler u.dgl. durch Strömungsumlenker und Labyrinth-Anordnungen zuverlässig nach aussen abzudichten. Die Vorrichtung ist überdies darin sehr vorteilhaft, dass Längenänderungen an Düse(n) und Verteiler problemlos aufgefangen werden.

Sehr günstig ist ferner eine Weiterbildung mit Abschirmungen im Bereich des Düseneinlaufs, um einen Zwischenraum zu schaffen, der sich bei der ersten Inbetriebnahme mit dem zu verarbeitenden Material anfüllt. Dieses erstarrt und bewirkt so eine hermetische Abdichtung. Die Abschirmung kann so gestaltet sein, dass sie Wärmedehnungen der benachbarten Bauteile ausgleicht oder zumindest zulässt.

Es folgt eine Beschreibung von Ausführungsbeispielen der Erfindung anhand der Zeichnung. Darin zeigen:

Fig. 1a eine Axialschnittansicht einer Düse in einem Verteiler einer erfindungsgemässen Vorrichtung,

Fig. 1b eine Querschnittsansicht entsprechend der Linie Ib–Ib in Fig. 1a,

Fig. 2 einen Teil-Axialschnitt einer abgewandelten Düse ähnlich Fig. 1a,

Fig. 3a, 3b, 3c, 3d je eine Teil-Schnittansicht verschiedener Ausführungsformen von Stützringen in einer Vorrichtung entsprechend Fig. 1a,

Fig. 4 eine Teil-Seitenansicht, teilweise im Schnitt eines Verteilers nach der Erfindung,

Fig. 5a, 5b, 5c je eine Seiten-, Axialschnitts-bzw. Querschnittsansicht einer anderen Ausführungsform einer erfindungsgemässen Düse mit Stützringen in einem Verteiler,

Fig. 6 eine Axialschnittansicht einer weiteren Düsen-Ausführungsform,

Fig. 7a und 7b eine Axial- bzw. Querschnittsansicht nach einer anderen Düsenausführungsform,

Fig. 8 eine Axialschnittsansicht einer abgewandelten Düse ähnlich Fig. 7a,

Fig. 9 eine Teil-Schnittansicht einer Ring-Dichtungsanordnung,

Fig. 10 eine Axialschnittsansicht wieder einer anderen Düsen-Ausführungsform,

Fig. 11a eine Axialschnittsansicht eines Teils eines Verteilers und eines Düsenkopfes,

Fig. 11b eine Querschnittsansicht entsprechend der Linie XIb–XIb in Fig. 11a,

Fig. 12a, 12b Axial- bzw. Querschnittsansichten ähnlich Fig. 11a, 11b von noch anderen Ausführungsformen der Erfindung,

Fig. 13 eine Teilschnittansicht eines anderen Düsenkopfes,

Fig. 14a eine Axialschnittsansicht einer modifizierten Verteiler- und Düsen-Ausführungsform,

Fig. 14b eine Querschnittsansicht einer gegenüber Fig. 14a veränderten Düse sowie

Fig. 15a und 15b
Fig. 16a und 16b
Fig. 17a und 17b
je eine Axial- bzw. Querschnitts-Teilansicht weiterer Ausführungsformen von Düsen bzw. deren Isolierungen.

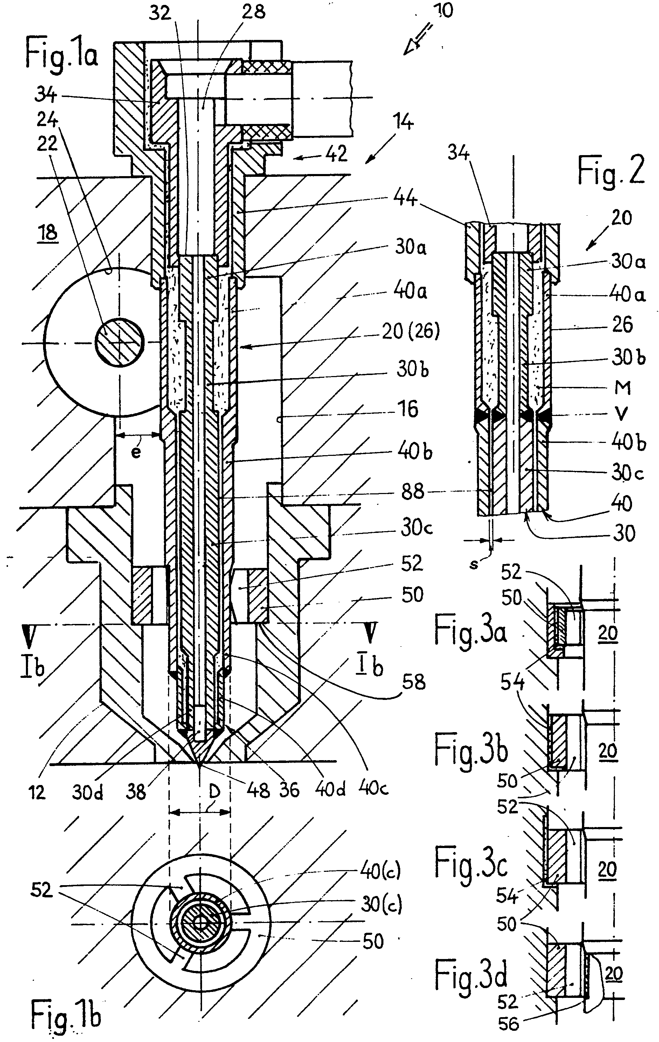

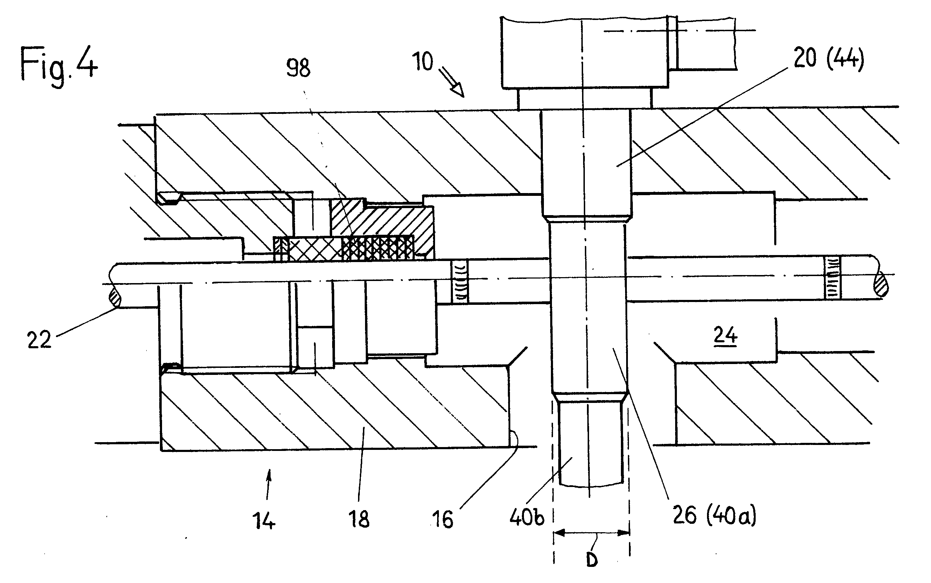

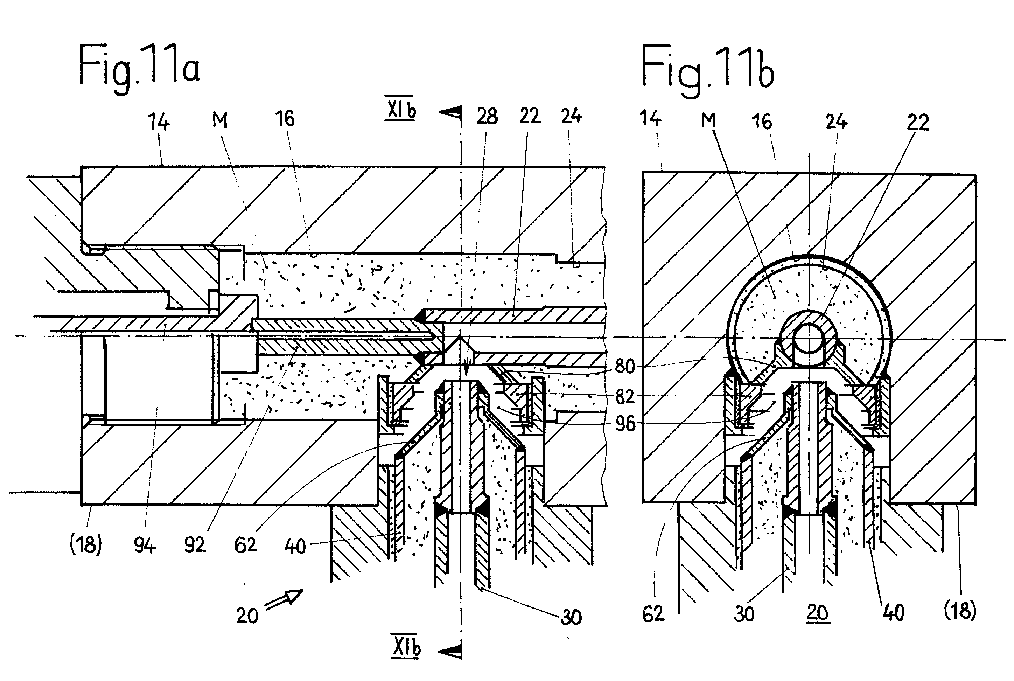

Die in Fig. 1a und 1b dargestellte, allgemein mit 10 bezeichnete Vorrichtung weist ein Werkzeug 12 und einen Verteiler 14 auf. Dieser hat einen Hohlraum 16, der in Form von Bohrungen gestaltet sein kann, in einem Gehäuse 18. Düsen oder Torpedos 20 durchsetzen den Hohlraum 16. Im Verteiler 14 ist ein Heizleiter 22 quer zu den Düsen 20 so angeordnet, dass eine Hohlraumbegrenzung oder Hülle 24 den Mittelteil 26 der Düsen 20 berührt. Der Heizleiter 22 kann als Stab oder Rohr ausgebildet und gegebenenfalls abgestuft sein (vgl. Fig. 4 und Fig. 11a).

Ein Materialeintritt oder Düseneinlauf 28 führt zu einem inneren Heizrohr 30, das aus gestuften Abschnitten 30a, 30b, 30c, 30d besteht. Am oberen Ende 32 schliesst eine Elektrode 34 an. Am unteren Ende 36 ist ein wärmeleitender Stift 38 vorgesehen, der in eine Düsenspitze 48 ragt. Letztere ist wärmeleitend und stoffschlüssig mit dem unteren Ende 46 eines äusseren Heizrohres 40 verbunden, das ebenfalls aus gestuften Abschnitten 40a, 40b, 40c, 40d besteht. Am oberen Ende 42 des äusseren Heizrohres 40 ist eine Elektrode 44 angeschlossen.

Die Vorrichtung ist so ausgelegt, dass die zugeführte Heizleistung bedarfsgerecht über die Länge der Düse 20 verteilt wird. Die gestuften Abschnitte der Heizrohre 30, 40 verändern den stromführenden Querschnitt (A) so, dass unmittelbar an der Düsenspitze 48 und am Materialeintritt bzw. Düseneinlauf 20 eine Wärmekonzentration zur Verfügung steht, im übrigen aber – vor allem am Düsenmittelteil 26 – eine möglichst gleichmässige Temperaturverteilung gegeben ist. Im Betrieb stellt sich durch die erzeugte Heizleistung einerseits und durch die Wärmeableitung der strömenden Kunststoffschmelze andererseits im Raum zwischen Düse 20 und äusserer Wandung des Werkzeugs 12 ein Beharrungszustand ein.

Man erkennt, dass die Temperatur-Führung erfindungsgemäss auch durch die Wahl des Aussendurchmessers D der Düse bzw. des Torpedos 20 optimiert werden kann, ferner durch den Durchmesser des Hohlraums 16 im Werkzeug 12 und durch geeignete Werkstoffauswahl der Heizrohre 30, 40. Zusätzlich kann ein Stützring 50, der wenigstens zwei, bevorzugt drei oder mehr Radialstege 52 aufweist, an ausgewählten Stellen entlang der Düse 20 entweder eine dosierte Wärmeabfuhr bewirken oder durch weitgehende Isolierung eine Wärmeabfuhr praktisch unterbinden. Zugleich wird die Düsenspitze 48 zum Angussloch hin zentriert und an einer Schulter bzw. einem Bund 58 die von der strömenden Kunststoffschmelze herrührende Kraft auf den Stützring 50 aufgenommen. Durch einen grösseren Durchmesser am Torpedo 20 wird ein unbeabsichtigtes Verrutschen im angefüllten Heisskanal verhindert.

Die elektrisch leitenden Heizrohre 30, 40 bestehen vorzugsweise aus Widerstandsmaterial auf der Basis von Nickellegierungen. Der Stift 38 sowie die Düsenspitze 48 bestehen aus gut wärmeleitenden Werkstoffen, wobei die Düsenspitze 48 insbesondere für die Verarbeitung von glasfaserverstärkten Thermoplasten verschleissfest ausgebildet ist. Der Stützring 50 und andere Abstützungen sind bevorzugt aus einem keramischen Werkstoff mit niedriger Wärmeleitfähigkeit hergestellt, beispielsweise Zirkonoxid.

Wie man aus den Fig. 3a bis 3d ersieht, kann der Stützring 50 so ausgebildet sein, dass Stege 52 aus leitendem Material mit Isolier-Zwischenlagen 54 bzw. 56 entweder radial aussen (Fig. 3a bis Fig. 3c) oder innen (Fig. 3d) versehen sind. Derartige nichtleitende Zwischenschichten können aus Emaille- oder Keramikkleber, einem Hochtemperaturkleber o.dgl. bestehen. Die jeweils andere Anlagefläche der Radialstege 52 kann und soll jedoch eine Axialbewegung zulassen, um einen Dehnungsausgleich zu ermöglichen.

Bevorzugt liegt der Stützring 50 in einem Abstand von zwei- bis fünfmal Torpedodurchmesser D von der Düsenspitze 48 entfernt. Durch diese Abstützung erfolgt eine dosierte Wärmeabfuhr nach aussen, so dass eine Temperatur-Erhöhung im Bereich (in Strömungsrichtung) vor dem Stützring 50 trotz der erhöhten Heizleistung in der Düsenspitze 48 vermieden wird.

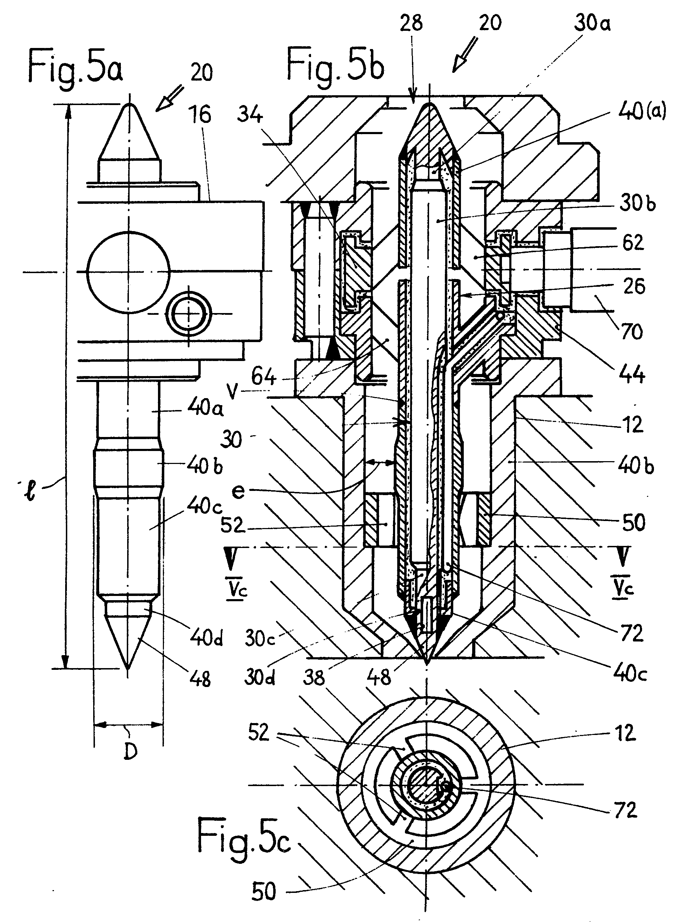

Insgesamt kann die Heizleistung über die Länge (ℓ, Fig. 5a) der Düse 20 ohne weiteres im Verhältnis 1:1,1 bis 1:5 variiert werden.

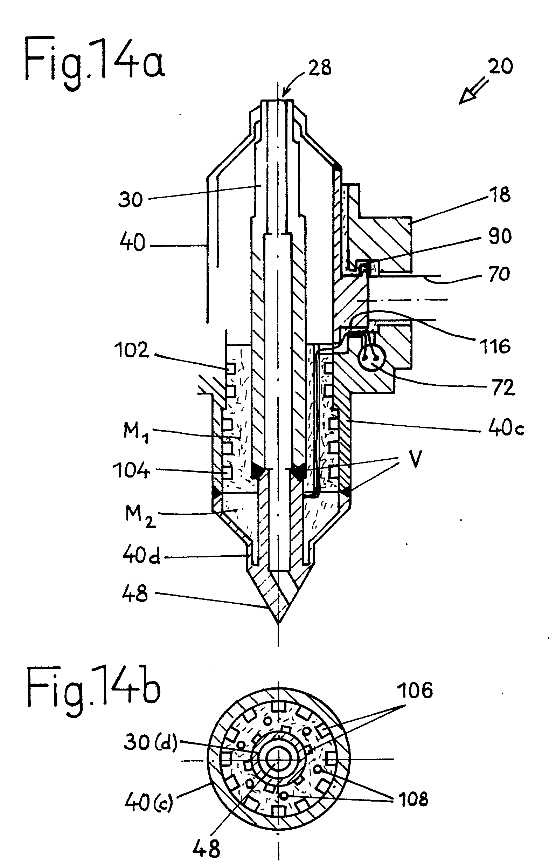

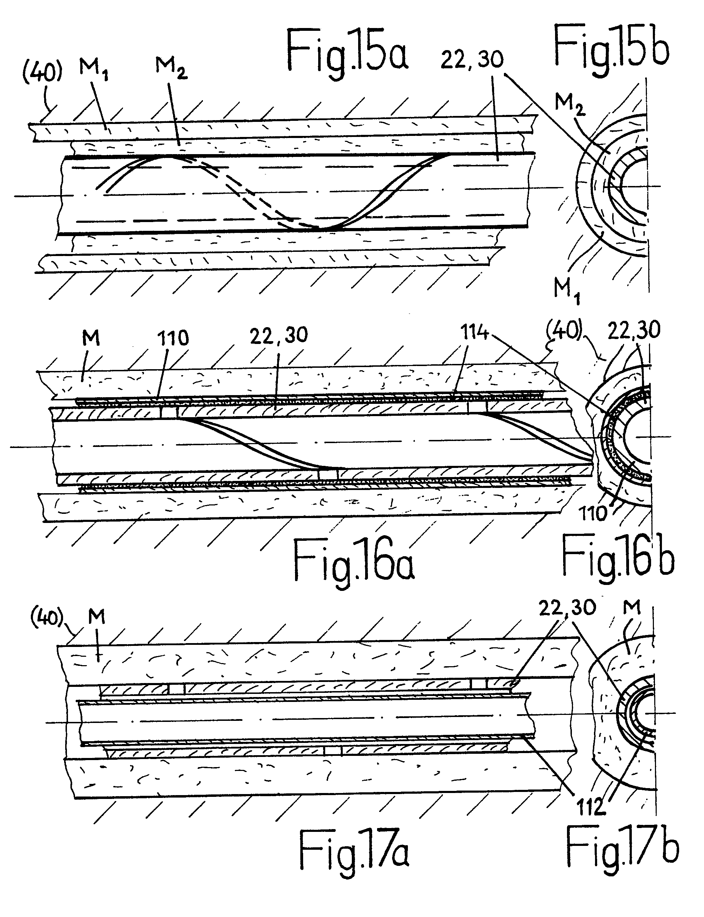

Zwischen dem äusseren Heizrohr 40 und dem inneren Heizrohr 30 ist eine Isoliermasse M vorhanden (vgl. beispielsweise Fig. 2); es ist auch möglich und erfindungsgemäss vorgesehen, mehrere Isoliermassen $M_1$, $M_2$ usw. (vgl. Fig. 14a, 15a, 15b) mit unterschiedlichen Materialeigenschaften und/oder Isolierformteile zu verwenden.

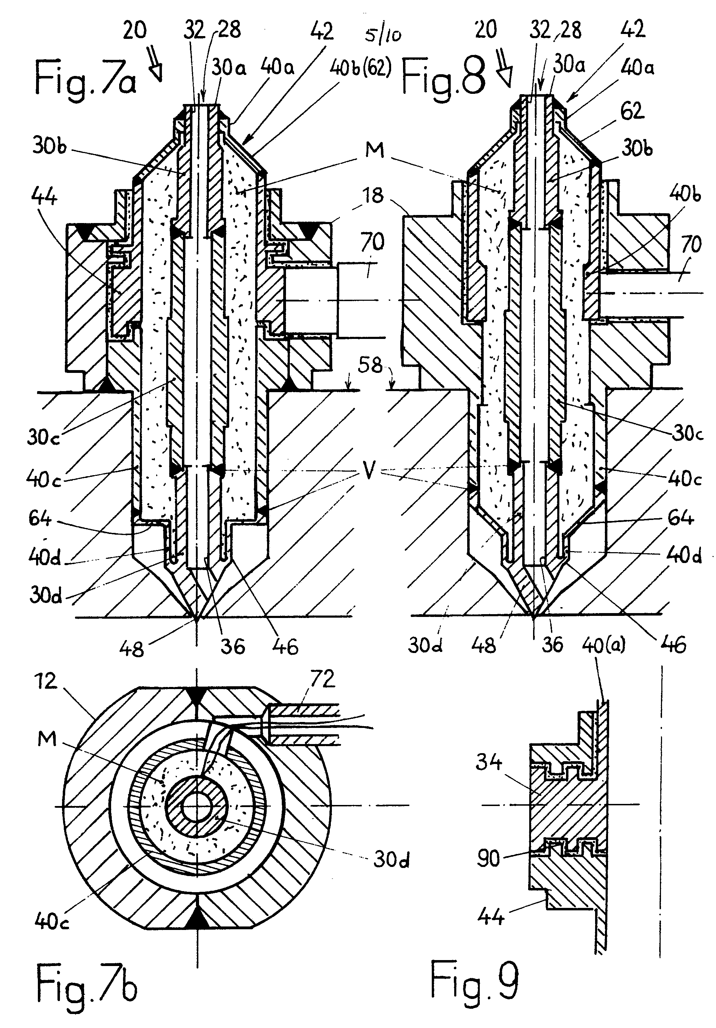

Wie z.B. aus den Ausführungsformen gemäss Fig. 5a, 5b und 7b ersichtlich ist, kann ein Thermofühler 72 und beispielsweise über ein Labyrinth 116 (Fig. 14a) abgedichtet in den Isolierraum eingeführt vorhanden sein, um die Temperatur an der Düsenspitze 48 ermitteln zu können. Zusätzlich kann der Thermofühler 72 so ausgebildet und angeordnet sein, dass sich damit auch das Temperaturprofil entlang der Düse 20 erfassen lässt. Im Produktionsbetrieb bleibt der Thermofühler 72 mit seiner Messspitze in der gezeichneten Lage. Der wärmeleitende Stift 38, der z.B. aus Kupfer besteht, sorgt für Temperaturausgleich im Messstellenbereich an der Düsenspitze 48.

Fig. 2 zeigt einen Ausschnitt aus einer Düse 20, die dem Aufbau gemäss Fig. 1a weitgehend entspricht. Hierbei sind jedoch die einzelnen Abschnitte 30a, 30b, 30c des inneren Heizrohres 30 und die Abschnitte 40a, 40b (40c) des äusseren Heizrohres 40 nicht einstückig, sondern aus verschiedenen Teilen gefertigt, die durch eine Verbindung V, beispielsweise Hartlötung, elektrisch leitend miteinander verbunden sind.

Unterschiedliche Bemessungen und/oder Werkstoffe können gemäss Ausführungsbeispiel der Fig. 4 auch am Verteiler 14 und seinem Heizleiter 22 angewandt werden. Hierbei kann beispielsweise der dem Torpedo 20 unmittelbar benachbarte Teilbereich des Heizleiters 22 einen höheren elektrischen Widerstand aufweisen. In der gleichen Zone kann der Verteiler 14 einen Hohlraum 24 von grösserem Durchmesser haben, als ihn die links und rechts seitlich anschliessenden Bohrungen besitzen. Hier wie im Ausführungsbeispiel gemäss Fig. 11a kann das Verhältnis der elektrischen Widerstände an den Teilbereichen des Heizleiters 22 (von rechts nach links) beispielsweise etwa 1:1,25:(0,1...0,2) und das Durchmesserverhältnis der Bohrung 24 zu den anschliessenden, engeren Hohlräumen etwa (1,1...1,4):1 betragen.

Auch bei der Ausführungsform gemäss Fig. 5a, 5b, 5c wird durch die erwähnten Massnahmen eine gleichmässige Temperaturverteilung über die Länge ℓ des Torpedos 20 erzielt. Dieser hat wiederum ein äusseres Heizrohr 40 und ein im Radialbereich dazu angeordnetes inneres Heizelement, das hier als Heizstab 30 ausgebildet ist. Wenigstens eine Isoliermasse M trennt Heizstab 30 und äusseres Heizrohr 40 elektrisch; lediglich an den Spitzen oben und unten (48) ist eine leitende Verbindung vorgesehen. Im unteren Teilbereich von Abschnitt 30b hat der Heizstab eine seitliche Ausnehmung oder Nut zur elektrisch isolierten Einbettung des Thermofühlers 72. Von als Rippen ausgebildeten Abstützungen 74 aus kann sich der Torpedo 20 nach beiden Seiten axial ausdehnen, so dass praktisch keine Wärmedehnungsbeanspruchungen infolge von Temperaturunterschieden auftreten. Gegenüber den aus dem Stand der Technik bekannten Stegen kann mit der Abstützung 50 gemäss der Erfindung die doppelte Axialkraft aufgenommen werden, was wesentlich zur Betriebssicherheit beiträgt.

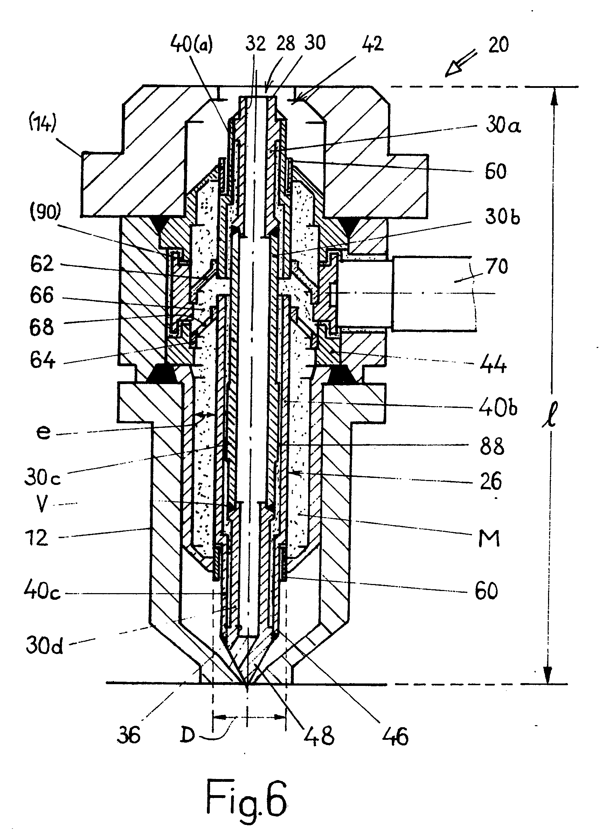

Dasselbe Konstruktionsprinzip ist auch bei der Ausführungsform nach Fig. 6 angewendet. Die Düse 20 ist hierbei als Doppelheizrohr gestaltet. Hierzu sind Ringe bzw. Hülsen 60 elektrisch isoliert von den Heizrohren 30, 40 angebracht. Mit dem Doppelheizrohr werden bedeutsame Vorteile erzielt, denn aus der Wärmedehnung resultierende Spannungen sind nahezu nicht vorhanden und der fliessende elektrische Strom beheizt sowohl auf dem Hin- als auch auf dem Rückweg den Kunststoff im Inneren des Heizrohres 30. Nach aussen ist das Doppelheizrohr mit einer wärmeisolierenden Masse M oder verschiedenen solchen Massen umgeben, um die Druckkräfte im Inneren der Düse bis zu 2 kbar auszugleichen und aufzunehmen.

Hier sei erwähnt, dass Heizstab 22 bzw. inneres Heizrohr 30 und äusseres Heizrohr 40 voneinander mit einem Isolierspalt 88 (Fig. 1a, 2) getrennt sind, dessen Breite s etwa ein Zehntel des jeweiligen äusseren Heizrohrdurchmessers D beträgt. Die Temperaturdifferenz vom inneren zum äusseren Heizelement bleibt daher unterhalb 10 grd.

Im Bereich des Düsenkörpers 20, insbesondere seines Mittelteils 26 sind wärmeleitende Abstützungen 62, 64 in Form von Stützrippen angebracht. Sie dienen neben der Stromleitung und Axialkraft-Uebertragung noch zur Wärmeabfuhr aus dem inneren Düsen-Bereich. Wie bereits beschrieben, wird erfindungsgemäss zur Temperaturerhöhung im Bereich des Materialeintritts 28 und unmittelbar an der Düsenspitze 48 dort die Heizleistung konzentriert. Dies könnte aber durch Wärmeleitung innerhalb der Heizelemente die Temperatur im mittleren Bereich 26 ansteigen lassen. Die radiale Abstützung bewirkt die notwendige Wärmeabfuhr und ermöglicht zusätzlich die Zentrierung der Düsenspitze 48 am Angussloch des Werkzeugs 12.

Fig. 7a, 7b, 8 zeigen Ausführungsbeispiele zur Optimierung der Temperatur-Führung durch Einsatz von (in den Abbildungen nicht einzeln gekennzeichneten) Isolierstoffen M mit abschnittsweise unterschiedlichen Wärmeleitwerten und/ oder mit Veränderung der Isolierschichtdicke. Hierbei wird in weiterer Ausgestaltung der Erfindung die Heizleitung in einem Teilbereich der Spitze 48 und des Materialeintritts 28 jeweils als kurzes Doppelheizrohr ausgebildet. An den Enden der Düse 20 erhält man auf diese Weise die gewünschte hohe Heizleistung, während die Wärmeabfuhr durch die Stützelemente 60 bzw. 62, 64 in einem bezüglich der Wärmekonzentration und Temperaturführung ungefährlichen Bereich erfolgt. Die mittleren Abschnitte 40b, 40c des äusseren Heizrohres 40 können zweckmässig aus elektrisch gut leitendem Material bestehen.

Die Stützelemente 62 bzw. 64 sind mindestens einmal an einer Düse 20 so ausgebildet, dass eine Abdichtung vom äusseren Heizrohr 40 zum Gehäuse erzielt wird. Der flüssige Kunststoff kann unter Druckausgleich aussen am Heizrohr in Kapillaren eintreten; ein ungewollter Fliessvorgang aussen am Heizrohr 40 findet somit nicht statt. Damit wird das herkömmlich mögliche Vorbeifliessen am Aussendurchmesser des Heizrohres vermieden, das ein Auswaschen des Isoliermaterials zur Folge haben und die Düse unbrauchbar machen konnte.

Eine Ausführung gemäss Fig. 9 sieht ein Labyrinth 90 an der Stromzuleitung zur Düse 20 vor. Das Labyrinth 90 ist z.B. mit einem isolierenden, hochtemperaturbeständigen Kleber beschichtet und ausgegossen, so dass eine sichere Abdichtung auch bei hohen Drücken gewährleistet ist. Wesentlich hierfür ist in Verbindung mit dem Hochtemperaturkleber oder einer Vergussmasse eine mindestens einmalige, vorzugsweise mehrmalige Umlenkung, beispielsweise jeweils um Winkel von 45°, 60° und/oder 90°.

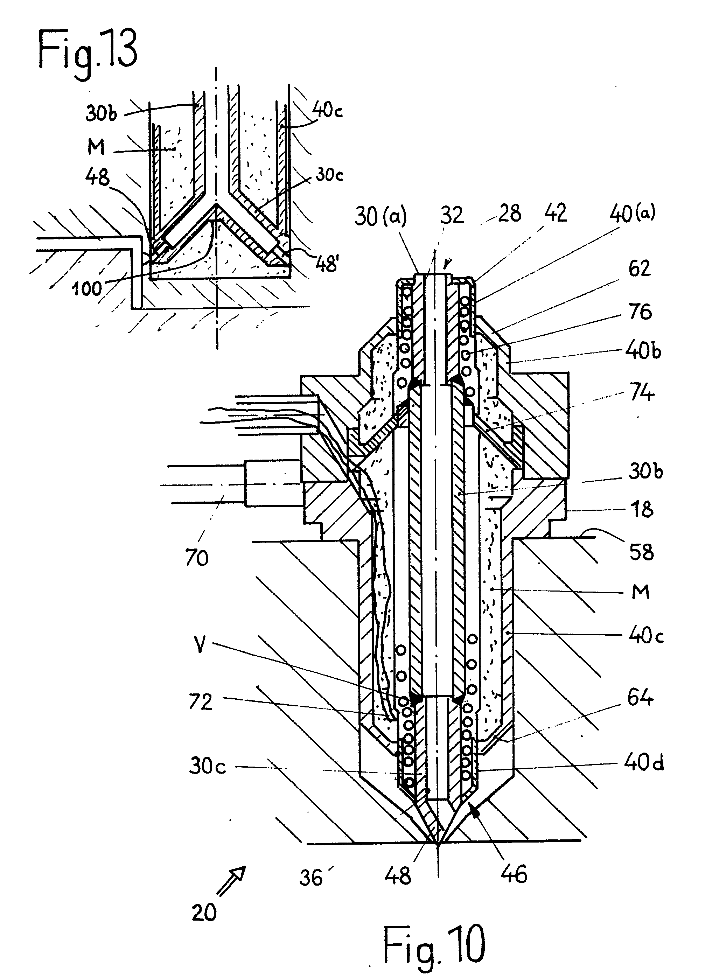

Die Beispiele in den Fig. 5b, 6 und 7a zeigen weitere Lösungsmöglichkeiten. Aus Fig. 7b und Fig. 10 ist ersichtlich, dass das Prinzip, mindestens einmal die Fliessrichtung umzulenken, auch auf den Thermofühler 72 angewendet ist. Bei der Ausführungsform nach Fig. 14a erfolgt die Abdichtung durch das Labyrinth 16.

Im Beispiel der Fig. 10 wird die Axialkraft auf das innere Heizrohr 30 über einen geschlossenen Schirm 74 aufgenommen. Die Beheizung erfolgt hier nicht direkt, sondern mit zusätzlichen, um das Rohr 30 gelegten Heizwendeln 76. Die Leistungsanpassung erfolgt in an sich bekannter Weise durch die Dichte der Wicklungen 76. Das beheizte Rohr kann sich auch hierbei gegenüber dem Gehäuse 80 ausdehnen. Die erhöhte Leistung am Materialeintritt 28 und an der Düsenspitze 48 wird durch die Aussenrohrabschnitte 40a, 40b und die Abstützungen 62, 64 abgeführt, so dass im mittleren Bereich des inneren Heizrohres 30 keine Übertemperaturen auftreten.

Bei der in Fig. 11a und Fig. 11b dargestellten Konstruktion erzielt man eine Temperaturanpassung über die Länge des als Rohr ausgebildeten Heizleiters 22 durch Verändern des Leitungsquerschnittes A, durch Verändern des Durchmessers des Hohlraums 24 am Verteiler 14, durch Wahl des Aussendurchmessers des Heizrohres 22 sowie des anschliessenden Verbindungsstückes 92 und/ oder durch Werkstoffauswahl, namentlich indem das Verbindungsstück 92 mit einem höheren spezifischen Widerstand ausgeführt wird als der Heizleiter 22 und seine Stromzuführung 94. Während letztere beispielsweise einen spezifischen Widerstand von 0,1...0,2 Ohm · mm²/m hat, kann das Verbindungsstück 92 einen spezifischen Widerstand von 1,3 Ohm · mm²/m haben.

Zum Begrenzen des Raumes für die Isoliermasse M bzw. die Massen $M_1$, $M_2$ im Verteiler 14 ist gemäss einer weiteren Ausgestaltung ein kegelstumpfförmiger Schirm 80 am Rohr 22 fest oder verschiebbar angebracht (Fig. 11a, 11b). Hierzu dient ein isolierter Ring 82, der aus zwei Teilen mit einer isolierenden Zwischenlage 84 bestehen kann. Der grösste Durchmesser des Schirms 80 ist kleiner als der des engeren Hohlraums 24 im Verteiler 14, so dass das Heizrohr 22 samt dem Kegelstumpf 80 in die querverlaufende Verteilerbohrung 16, 24 eingeführt werden kann. Der davon innen begrenzte Raum 96 wird bei der ersten Inbetriebnahme mit Kunststoff gefüllt. Dieser erstarrt und dichtet die Steckverbindung ab.

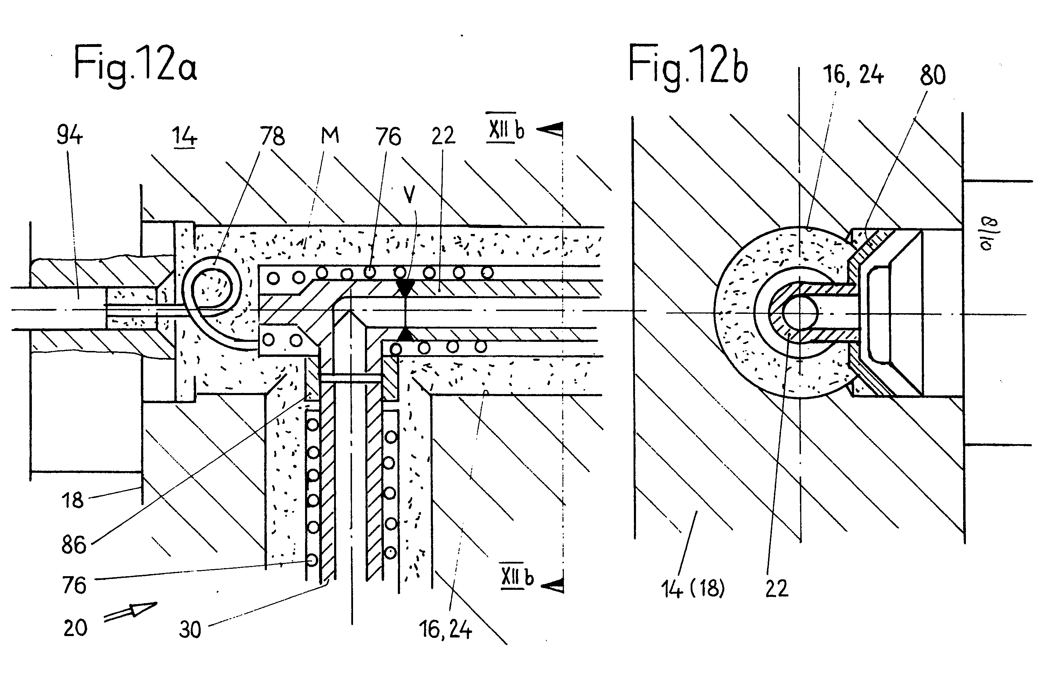

Die in Fig. 12a und 12b dargestellte Ausführungsform erlaubt eine weitere Art der Beheizung des inneren Rohres 22/30 mit fast vollkommener thermischer Trennung des heissen Innenteils vom Verteilergehäuse 18. Das Heizrohr 22/30 ist in Isoliermasse M eingebettet. Durch die sehr klein bemessene Stromzuführung 78 wird überaus wenig Wärme abgeführt, während die Verbindung dehnungselastisch ist. An den Heizrohren erlaubt eine Muffe 86 eine Wärmeausdehnung, z.B. bei der Abzweigung, einem Winkelstück o.dgl.

Zur Wärmekonzentration an den Enden der Düse bzw. des Torpedos 20 ist es wichtig, dass der Wärmedurchgang dort gegenüber dem Mittelteil 26 herabgesetzt ist, z.B. durch vergrösserte Abstände, niedrige Wärmeleitwerte o.dgl. So ist es erfindungsgemäss möglich, die benötigte Wärme an die engen bzw. engeren Spalte am Materialeintritt 28 einerseits und an der Düsenspitze 48 andererseits verlustarm heranzuführen.

Soll der Bereich der Düsenspitze 48 besonders ausgelegt werden, so kan es zweckmässig sein, beispielsweise gemäss Fig. 7a die untere Abstützzung 64 achsensenkrecht zwischen den Abschnitten 40 c, 40d des äusseren Heizrohres 40 anzuordnen. Auch bei den Ausführungsbeispielen von Fig. 8 und Fig. 10 ist, mit schräg verlaufenden Abstützungen 64, ein Absatz am unteren Düsenende geschaffen, der zu der gewünschten Wärmekonzentration beiträgt.

Eine andere Düsen-Bauform zeigt Fig. 13. Hierbei ist das Düsenende in Form eines Verteilerkopfes ausgebildet, der z.B. zwei oder mehr Rohrstege 48, 48' und/oder einen Boden bzw. Schirm 100 aufweisen kann, welcher Umfangsöffnungen – etwa Schlitze, Rundlöcher o.dgl. – begrenzt. Über jede solche Düsen«spitze» wird das Spritzgiessmaterial in ein oder mehrere (nicht dargestellte) Formennester geleitet.

Im Bereich der insbesondere auch porigen Isoliermassen $M_1$, $M_2$ können Ausnehmungen vorhanden sein, die gemäss Fig. 14a entweder als Umfangsnuten 102 und/oder als Wendelnuten 104, aber auch nach Fig. 14b als Axialnuten 106 und/oder als Löcher bzw. Bohrungen 108 gestaltet sein können. Auch schräge und radiale Verläufe sind möglich.

Schliesslich ist aus den Fig. 15a, 15b; 16a, 16b; 17a, 17b zu ersehen, dass der innere Heizleiter 22 bzw. das innere Heizrohr 30 eine Rohrwendel sein und mit einem äusseren Schutzrohr 110, einem inneren Schutzrohr 112 und/oder einer Isolierbeschichtung 114 bzw. Isolierringen versehen sein kann.

In den Rahmen der in den Ansprüchen definierten Erfindung fallen zahlreiche Abwandlungen.

Legende

| | |
|---|---|
| A | Querschnitt |
| D | Durchmesser |
| e | Abstand |
| ℓ | Länge |
| M; $M_1$, $M_2$ | Isoliermasse |
| s | Spaltbreite |
| V | Verbindung (Lötung) |
| 10 | Vorrichtung |
| 12 | Werkzeug |
| 14 | Verteiler |
| 16 | Hohlraum/Bohrung(en) |
| 18 | Gehäuse |
| 20 | Düsen |
| 22 | Heizleiter |
| 24 | Hülle/Hohlraum(begrenzung) |
| 26 | Mittelteil |
| 28 | Düseneinlauf |
| 30 | inneres Heizrohr |
| 30a, b, c, d | Abschnitte |
| 32 | oberes Ende |
| 34 | Elektrode |
| 36 | unteres Ende |
| 38 | Stift |
| 40 | äusseres Heizrohr |
| 40a, b, c, d | Abschnitte |
| 42 | oberes Ende |
| 44 | Elektrode |
| 46 | unteres Ende |
| 48 | Düsenspitze |
| 50 | Stützring |
| 52 | Radialstege |
| 54, 56 | Isolier-Zwischenlagen |
| 58 | Bund/Schulter |
| 60 | Isolierhülse |

| | |
|---|---|
| 62, 64 | leitende Abstützungen |
| 66 | Isolierschicht |
| 68 | Durchbruch |
| 70 | Anschlüsse |
| 72 | Thermofühler |
| 74 | Abstützung |
| 76 | Heizwicklung |
| 78 | Stromzuführung |
| 80 | Abschirmung |
| 82 | Ringgegenstück |
| 84 | Isolier-Zwischenlage |
| 86 | Muffe |
| 88 | Spalt |
| 90 | Labyrinth |
| 92 | Verbindungsstück |
| 94 | Stromzuführung |
| 96 | Zwischenraum |
| 98 | Stopfbuchse |
| 100 | Boden/Schirm |
| 102 | Umfangsnuten |
| 104 | Wendelnuten |
| 106 | Axialnuten |
| 108 | Bohrungen |
| 110 | äusseres ⎫ Schutzrohr |
| 112 | inneres ⎭ |
| 114 | Isolierring/-beschichtung |
| 116 | Labyrinth |

**Patentansprüche**

1. Vorrichtung zum Heisskanal-Spritzgiessen insbesondere temperaturempfindlicher Thermoplaste, mit einem Werkzeug (12), einem Verteiler (14), einem Heizleiter (22) im Verteiler und angeschlossenen Düsen (20) mit elektrisch beheizbaren Einsätzen vorgegebener elektrischer Leitfähigkeit, dadurch gekennzeichnet, dass die Einsätze als konzentrische Anordnungen von inneren und äusseren Heizrohren (30, 40) vorgesehen sind, wobei diese sowie die Stromanschlüsse (34, 44, 70) aus Material vorgegebener elektrischer Leitfähigkeit bestehen und abschnittsweise gestufte Leiterquerschnitte (A), Durchmesser (D), Abstände (e) zum benachbarten Gehäuse und/oder Werkstoffe verschiednenen spezifischen Widerstands haben, und dass ausgewählte Abschnitte der Heizrohre (30, 40) durch Isolierabstützungen (50; 60) mit dem umgebenden Gehäuse verbunden sind, wobei insbesondere die äusseren Heizrohrabschnitte (40) gegenüber dem Gehäuse dehnungsbeweglich abgestützt sind.

2. Vorrichtung nach Anspruch 1, dadurch gekennzeichnet, dass wenigstens eine Abstützung als Ring (50) mit mindestens zwei, vorzugsweise drei Radialstegen (52) und isolierender Zwischenlage (54) ausgebildet ist.

3. Vorrichtung nach Anspruch 1 oder 2, dadurch gekennzeichnet, dass zwischen äusserem und innerem Heizelement (40; 30 bzw. 22) im Verteiler (14) wenigstens ein Isolierring bzw. eine Isolierbeschichtung (114) vorhanden ist.

4. Vorrichtung nach einem der Ansprüche 1 bis 3, mit wenigstens einer Abstützung (62; 64; 74), die den Mittelteil (26) der Düse (20) haltert und Isolierräume in der Düse (20) trennt, dadurch gekennzeichnet, dass zwei durch eine Isolierschicht (66) getrennte, elektrisch leitende Abstützungen (62, 64) oder Abstützungspaare übereinander angeordnet sind, namentlich in der Zone der elektrischen Anschlüsse (70) und/oder des umgebenden Gehäuses.

5. Vorrichtung nach einem der Ansprüche 1 bis 4, dadurch gekennzeichnet, dass nahe dem unteren Ende (46) des äusseren Heizrohres (40), jedoch im Abstand zu der Düsenspitze (48), eine radiale Abstützung (50, 52) angeordnet ist, insbesondere ein Stütz- oder Zentrierring (50), eine Isolierhülse (60) o.dgl. im Bereich eines Abstandes von etwa ein- bis achtmal dem kleinsten Aussendurchmesser (D) des äusseren Heizrohres (40) von der Düsenspitze (48) bzw. vom Materialeintritt (28).

6. Vorrichtung nach Anspruch 4 oder 5, dadurch gekennzeichnet, dass zumindest eine leitende Abstützung (64) im Bereich der Isolierschicht (66) einen Durchbruch (68) hat, beispielsweise eine Bohrung oder Nut, in die ein Thermofühler isoliert und geschützt eingebettet ist.

7. Vorrichtung nach wenigstens einem der Ansprüche 1 bis 6, wobei am inneren Heizrohr (30) zumindest einer Düse (20) ein Thermofühler (72) fest oder verschieblich im oder am inneren Heizelement (22 bzw. 30) elektrisch isoliert und mechanisch geschützt angeordnet ist, dadurch gekennzeichnet, dass der Thermofühler (72) aussermittig zum Stromanschluss (70) der Düse (20) sitzt und zum inneren Heizelement (22 bzw. 30) hin eine speziell labyrinthförmige Umlenkung aufweist.

8. Vorrichtung nach wenigstens einem der Ansprüche 1 bis 7, dadurch gekennzeichnet, dass an den Stromzuführungen (70) eine hochdruckfeste Abdichtung vorgesehen ist, insbesondere mit einer Stopfbuchse (98) oder durch eine Isolier-Vergussmasse in Verbindung mit zumindest einer labyrinthförmigen Umlenkung (90).

9. Vorrichtung nach wenigstens einem der Ansprüche 1 bis 8, dadurch gekennzeichnet, dass die bzw. jede Düse (20) zumindest an ihren Enden (32, 36; 42, 46) als Doppelheizrohr ausgebildet und mit wenigstens einer kegelstumpfförmigen Abstützung (74) gegenüber dem Aussenrohr (40) gehalten ist.

10. Vorrichtung nach wenigstens einem der Ansprüche 1 bis 9, dadurch gekennzeichnet, dass der Heizleiter (22) und/oder das innere Heizrohr (30) zumindest an seinen Enden (32, 36) von einer Heizwicklung (76) umschlossen oder zumindest der untere Aussenabschnitt (40d) des Doppelheizrohres mit dessen leitender Abstützung (64) einstückig ist.

11. Vorrichtung nach wenigstens einem der Ansprüche 1 bis 10, dadurch gekennzeichnet, dass zwischen dem äusseren Heizrohr (40) und dem Gehäuse (18) vorhandene Isoliermassen (M, M$_1$, M$_2$) unterschiedliche Wärmeleitwerte haben.

12. Vorrichtung nach wenigstens einem der Ansprüche 1 bis 11, dadurch gekennzeichnet, dass der Heizleiter (22) und/oder das innere Heizrohr (30) sowie eine elastischdehnbare Stromzuführung (78) von möglichst kleinem Leiterquerschnitt in Isoliermasse (M) eingebettet sind.

13. Vorrichtung nach Anspruch 12, dadurch gekennzeichnet, dass die Isoliermasse (M) ein Sinterwerkstoff ist, bevorzugt mit einer Rohdichte von 0,5...2,8 kg/dm$^3$, einem Porenanteil von wenigstens 20% einer Porengrösse oberhalb 1 μm und/oder einem Wärmeleitwert unterhalb 2 W/m · K.

14. Vorrichtung nach wenigstens einem der Ansprüche 11 bis 13, dadurch gekennzeichnet, dass die Heizleistung über die Düsenlänge (ℓ) im Verhältnisbereich von wenigstens 1 : 1,1 bis 1 : 5 veränderbar ist, dass der Querschnitt (A) zumindest eines Heizrohres (30 bzw. 40) über die Düsenlänge (ℓ) im Bereich von etwa 1 : 4 variiert, dass der Durchmesser von umgebenden Gehäusebohrungen abschnittsweise im Bereich von etwa 1 : 1,5 variiert und/oder dass der Wärmeleitwert der Isoliermasse (M) abschnittsweise in einem Verhältnis von bis zu 1 : 5 variiert.

15. Vorrichtung nach wenigstens einem der Ansprüche 1 bis 14, dadurch gekennzeichnet, dass der elektrische Widerstand von Abschnitten (92, 94) des Heizleiters (22) und der Heizrohre (30, 40) über die Länge im Bereich von etwa 1 : 2 und in der Zone der elektrischen Anschlüsse (70) im Bereich von etwa 1 : 10 gestuft ist.

16. Vorrichtung nach wenigstens einem der Ansprüche 1 bis 15, dadurch gekennzeichnet, dass ein Spalt (88) mit einer Breite (s) von höchstens einem Zehntel des jeweiligen Aussendurchmessers des äusseren Heizrohres (40) zwischen diesem und dem inneren Heizrohr (30) vorhanden ist.

17. Vorrichtung nach wenigstens einem der Ansprüche 1 bis 16, dadurch gekennzeichnet, dass das äussere Heizrohr (40) gegenüber einem mittleren Abschnitt (z.B. 30b, 30c) des inneren Heizrohres (30) unterbrochen und/oder letzteres bzw. der Heizleiter (22) als Rohrwendel ohne oder mit äusserem oder innerem Schutzrohr (110 bzw. 112) ausgebildet ist.

18. Vorrichtung nach wenigstens einem der Ansprüche 1 bis 17, dadurch gekennzeichnet, dass wenigstens ein Isoliermassen-Formteil vorhanden und mit Ausnehmungen versehen ist, namentlich mit Umfangs- und/oder Wendelnuten (102, 104), Axialnuten (106), Bohrungen (108) o.dgl.

19. Vorrichtung nach wenigstens einem der Ansprüche 1 bis 18, dadurch gekennzeichnet, dass die bzw. jede Düsenspitze (48) aus einem Material mit anderen elektrischen und Wärme-Leiteigenschaften als die Heizrohre (30, 40) ausgebildet und/oder über einen wärmeleitenden Stift (38) mit dem inneren Heizrohr (30) verbunden ist.

20. Vorrichtung wenigstens nach Anspruch 19, dadurch gekennzeichnet, dass die Heizrohre (30, 40) in zwei oder mehr Düsenspitzen (48, 48') auslaufen, die vorzugsweise als Rohrstege, Umfangsöffnungen eines Schirms oder Bodens (100) o.dgl. ausgebildet sind.

**Claims**

1. Device for hot runner injection-moulding, in particular of heat sensitive thermoplastics, including a mould (12), a manifold (14), a heating conductor (22) in the manifold and connected-up nozzles with electrically heatable inserts of given electrical conductivity, wherein the inserts are designed as concentric arrangements of inner and outer heating tubes (30, 40), these, as well as the electrical terminal (34, 44, 70), being constructed from a material of given electrical conductivity and having sectional gradations of conductor cross-section (A), circumference (D) and clearances (e) to the neighbouring case and/or substances of differing specific resistances, and wherein selected sections of the heating tubes (30, 40) are connected through insulated supports (50, 60) with the surrounding casing, the outer heating tube sections (40) in particular being displaceably supported for expansion relative to the case.

2. Device according to claim 1, wherein at least one support is constructed as a ring (50) with at least two, preferably three, radial bars (52) and an insulated intermediate bearing (54).

3. Device according to claim 1 or 2, wherein at least one insulating ring or insulating coating (114) is provided between the outer and inner heating elements (40; 30 or 22) in the manifold (14).

4. Device according to any one of claims 1 to 3, including at least one support (62, 64, 74) securing the middle part (26) of the nozzle (20) and separating insulation spaces in the nozzle (20), wherein two current carrying supports (62, 64) separated by an insulating layer (66) or pairs of supports are arranged one above the other, specifically in the region of the electrical terminals (70) and/or the surrounding case.

5. Device according to any one of claims 1 to 4, wherein a radial support (50, 52) is provided near the bottom end (46) of the outer heating tube (40) but at a spacing to the nozzle point (48), in particular a supporting or centering ring (50), an insulator casing (60) or the like, at a distance off the nozzle point (48) or the plastics inflow (28) of about one to eight times the smallest external diameter (D) of the outer heating tube (40).

6. Device according to claim 4 or 5, wherein at least one current carrying support (64) has a gap (68) in the region of the insulating layer (66), for example a bore hole or groove, in which a thermal sensor is embedded for insulation and protection.

7. Device according to at least one of claims 1 to 6, a thermal sensor (72) being mounted for electrical insulation and mechanical protection on the inner heating tube (30) of at least one nozzle (20) so as to be fixed or shiftable in or at the inner heating element (22 or 30), wherein the thermal sensor (72) is sited eccentrically relative to the electricity connection (70) to the nozzle (20) and is provided with a special labyrinth-shaped direction changer towards the inner heating element (22 or 30).

8. Device according to any one of claims 1 to 7, wherein a high-pressure resistant seal is provided at the power leads (70), in particular by means of a conduit gland (98) or by an insulating casting compound in combination with at least one labyrinth-shaped direction changer (90).

9. Device according to any one of claims 1 to 8, wherein the nozzle (20) or each one is constructed at least at its ends (32, 36, 42, 46) as a double heating tube and is secured with respect to the outer tube (40) by at least one support (74) of truncated cone shape.

10. Device according to any one of claims 1 to 9, wherein the heating conductor (22) and/or the inner heating tube (30) is, at least at its ends (32, 36) surrounded by a heating coil (76) or at least the lower outer section (40d) of the double heating tube is integral with the current carrying support (64) thereof.

11. Device according to any one of claims 1 to 10, wherein the insulating substances (M, $M_1$, $M_2$) provided between the outer heating tube (40) and the case (18) have different coefficients of thermal conductivity.

12. Device according to any one of claims 1 to 11, wherein the heating conductor (22) and/or the inner heating tube (30) as well as an elastically expandable power lead (78) of minimum conductor cross-section are embedded in an insulating substance (M).

13. Device according to claim 12, wherein the insulating substance (M) is a sinter material preferably with a density of 0.5 ... 2.8 kg/dm³, a pore content of at least 20% with a pore size above 1 µm and/or a coefficient of thermal conductivity below 2 W/m · K.

14. Device according to any one of claims 11 to 13, wherein the heating power can be altered over the nozzle length ($\ell$) in a ratio ranging at least between 1 : 1.1 and 1 : 5; wherein the cross-section (A) of at least one heating tube (30 or 40) varies over the nozzle length ($\ell$) at a ratio of roughly 1 : 4; wherein the diameter of the surrounding bore hole in the case varies sectionwise at a ratio of about 1 : 1.5; and/or wherein the coefficient of thermal conductivity of the insulating substance (M) varies sectionwise at a ratio of up to 1 : 5.

15. Device according to any one of claims 1 to 14, wherein the electrical resistance of sections (92, 94) of the heating conductor (22) and of the heating tubes (30, 40) is graduated over the length at a ratio of about 1 : 2 and in the region of the power terminals (70) at a ratio of about 1 : 10.

16. Device according to any one of claims 1 to 15, wherein a gap (88) is provided between the outer (40) and inner (30) heating tubes, the gap width (s) being at most one tenth of the respective outer diameter of the outer heating tube (40).

17. Device according to any one of claims 1 to 16, wherein the outer heating tube (40) has a break opposite to a middle section (e.g. 30b, 30c) of the inner heating tube (30) and/or wherein the latter or the heating conductor (22) is constructed as a spiral tube with or without an outer or inner protecting tube (110, 112 resp.).

18. Device according to any one of claims 1 to 17, wherein there is at least one shaped piece of insulating substance and is provided with recesses, in particular with circumferential and/or spiral grooves (102, 104), axial grooves (106), bores (108) or the like.

19. Device according to any one of claims 1 to 18, wherein the nozzle point (48) or each one, respectively, is made from a material with a coefficient of electrical and thermal conductivity differing from that of the heating tubes (30, 40) and/or wherein it is connected to the inner heating tube (30) via a heat conducting rod (38).

20. Device at least according to claim 19, wherein the heating tubes (30, 40) terminate in two or more nozzle points (48, 48′) which are preferably designed as pipe bars, peripheral openings in a screen or base (100) or the like.

## Revendications

1. Dispositif de moulage par injection à canaux chauffants, en particulier pour des matières thermoplastiques, comprenant un outil (12), un distributeur (14), un conducteur chauffant (22) disposé dans le distributeur et des buses raccordées (20) avec des inserts à chauffage électrique ayant une conductivité électrique donnée, caractérisé en ce que les inserts sont prévus sous forme d'une disposition concentrique de tuyaux chauffants intérieurs et extérieurs (30, 40), ceux-ci ainsi que les connexions électriques (34, 44, 70) étant constitués d'un matériau d'une conductivité électrique donnée et présentant des sections de conducteurs (A), des diamètres (D), des distances (e) par rapport au carter adjacent gradués par segments et/ou des matériaux de résistivité différente, et en ce que des segments choisis des tuyaux chauffants (30, 40) sont reliés par des supports isolants (50; 60) au carter entourant, les segments extérieurs du tuyau chauffant (40) en particulier étant supportés de façon à être dilatables par rapport au carter.

2. Dispositif suivant la revendication 1, caractérisé en ce que au moins un support est réalisé sous forme d'un anneau (50) avec au moins deux, de préférence trois entreroises radiales (52) et une couche intermédiaire isolante (54).

3. Dispositif suivant la revendication 1 ou 2, caractérisé en ce que entre l'élément de chauffage extérieur et l'élément de chauffage intérieur (40; 30 resp. 22), à l'intérieur du distributeur (14), il est prévu au moins un anneau isolant resp. un revêtement isolant (114).

4. Dispositif suivant une des revendications 1 à 3, comprenant au moins un support (62; 64; 74), supportant la partie médiane (26) de la buse (20) et séparant des espaces isolants à l'intérieur de la buse (20), caractérisé en ce que deux supports conducteurs (62, 64) ou deux couples de supports, séparés par une couche intermédiaire isolante (66), sont disposés l'un au-dessus de l'autre, en particulier dans la zone des connexions électriques (70) et/ou du carter entourant.

5. Dispositif suivant une des revendications 1 à 4, caractérisé en ce que, à proximité du bout inférieur (46) du tuyau chauffant extérieur (40), mais à une certaine distance par rapport à la pointe de la buse (48), il est disposé un support radial (50, 52), en particulier un anneau de support ou de centrage (50), une douille isolante (60) etc., à une distance d'environ une à huit fois le diamètre extérieur minimal (D) du tuyau chauffant extérieur (40) par rapport à la pointe de la buse (48) resp. à l'entrée matériau (28).

6. Dispositif suivant la revendication 4 ou 5, caractérisé en ce que au moins un support conducteur (64) présente un percement (68) dans la zone de la couche isolante (66), par exemple une forure ou une rainure, où est incorporée une sonde de température de façon à être isolée et protégée.

7. Dispositif suivant au moins une des revendications 1 à 6, où au tuyau chauffant intérieur (30) d'au moins une buse (20) il est disposé une sonde de température (72) de façon à être fixe ou mobile à l'intérieur de ou à l'élément de chauffage intérieur (22 resp. 30), étant électriquement isolé et mécaniquement protégé, caractérisé en ce que ladite sonde de température (72) est disposée de façon excentrique par rapport à la connexion électrique (70) de la buse (20) et en ce qu'elle présente une déviation spéciale à forme de labyrinthe orientée vers l'élément de chauffage intérieur (22 resp. 30).

8. Dispositif suivant au moins une des revendications 1 à 7, caractérisé en ce que, aux connexions électriques (70), il est prévu une garniture résistant aux pression élevées, comprenant en particulier une boîte à étoupes (98) ou avec une masse de scellement isolante en combinaison avec au moins une déviation à forme de labyrinthe (90).

9. Dispositif suivant au moins une des revendications 1 à 8, caractérisé en ce que la resp. chaque buse (20) est réalisée, au moins à ses bouts (32, 36; 42, 46), sous forme d'un tuyau chauffant double et qu'elle est supportée par rapport au tuyau extérieur par au moins un support tronconique (74).

10. Dispositif suivant au moins une des revendications 1 à 9, caractérisé en ce que le conducteur chauffant (22) et/ou le tuyau chauffant intérieur (30) est entouré, au moins à ses bouts (32, 36), d'un enroulement chauffant (76), ou en ce que au moins le segment extérieur inférieur (40d) du tuyau chauffant double est formé d'une seule pièce avec son support conducteur 64).

11. Dispositif suivant au moins une des revendications 1 à 10, caractérisé en ce que des masses isolantes (M, $M_1$, $M_2$), existant entre le tuyau chauffant extérieur (40) et le carter (18), présentent des conductivités thermiques différentes.

12. Dispositif suivant au moins une des revendications 1 à 11, caractérisé en ce que le conducteur chauffant (22) et/ou le tuyau chauffant intérieur (30) ainsi qu'une ligne d'alimentation élastique (78), ayant une section de conducteur aussi petite que possible, sont incorporés dans une masse isolante (M).

13. Dispositif suivant la revendication 12, caractérisé en ce que la masse isolante (M) est constituée d'un matériau fritté, ayant de préférence une masse volumique apparente de 0,5 . . . 2,8 kg/dm³, un pourcentage de pores d'au moins 20%, une grosseur de pores supérieure à 1 µm et/ou une conductivité thermique inférieure à 2 W/m · K.

14. Dispositif suivant au moins une des revendications 11 à 13, caractérisé en ce que la puissance calorifique est variable sur la longueur de la buse (ℓ) dans un rapport d'au moins 1 : 1,1 à 1 : 5, en ce que la section (A) d'au moins un tuyau chauffant (30 resp. 40) est variable sur la longueur de la buse (ℓ) dans un rapport d'environ 1 : 4, en ce que le diamètre de forures entourantes disposés au carter est variable par segments dans un rapport d'environ 1 : 1,5, et/ou en ce que la conductivité thermique de la masse isolante (M) est variable par segments dans un rapport de jusqu'à 1 : 5.

15. Dispositif suivant au moins une des revendications 1 à 14, caractérisé en ce que la résistance électrique de segments (92, 94) du conducteur chauffant (22) et des tuyaux chauffants (30, 40) est graduée sur la longueur dans un rapport d'environ 1 : 2 et dans la zone des connexions électriques (70) dans un rapport d'environ 1 : 10.

16. Dispositif suivant au moins une des revendications 1 à 15, caractérisé en ce qu'une fente (88) d'une largeur (s), s'élévant au maximum à un dixième du diamètre extérieur correspondant du tuyau chauffant extérieur (40), est prévue entre celui-ci et le tuyau chauffant intérieur (30).

17. Dispositif suivant au moins une des revendications 1 à 16, caractérisé en ce que le tuyau chauffant extérieur (40) est interrompu en face d'un segment médian (par ex. 30b, 30c) du tuyau chauffant intérieur (30), et/ou en ce que ce-dernier resp. le conducteur chauffant (22) est réalisé sous forme d'une hélice tubulaire sans ou avec tuyau de protection extérieur ou intérieur (110 resp. 112).

18. Dispositif suivant au moins une des revendications 1 à 17, catactérisé en ce qu'il est prévu au moins un préformé à masse isolante, muni de creux, en particulier de rainures périphériques et/ou hélicoïdales (102, 104), rainures axiales (106), forures (108) etc.

19. Dispositif suivant au moins une des revendications 1 à 18, caractérisé en ce que la resp. chaque pointe de buse (48) est réalisée en un matériau à caractéristiques de conductibilité thermique différentes de celles des tuyaux chauffants (30, 40) et/ou en ce qu'elle reliée par une cheville thermoconductrice (38) au tuyau chauffant intérieur (30).

20. Dispositif suivant au moins la revendication 19, caractérisé en ce que les tuyaux chauffants (30, 40) terminent en une ou plusieurs pointes de buse (48, 48'), qui sont de préférence réalisées sous forme d'entretoises tubulaires, ouvertures périphériques d'un écran ou d'un fond (100) etc.

0 137 888

Fig.1a

Fig.1b

Fig.2

Fig.3a

Fig.3b

Fig.3c

Fig.3d

11

Fig.4

20 (44)

10

98

0 137 888

22

24

14  18  16  40b  26 (40a)

D

Fig.5a

Fig.5b

Fig.5c

Fig.6

Fig.7a

Fig.8

Fig.7b

Fig.9

Fig.13

30b
M
48
100

40c
30c
48'

30 (a)    32    28    42    40(a)
62
76
40b
74
70
30b
18
58
M
40c
V
72
64
40d
30c
36
48    46
20

Fig.10

# Fig.11a

# Fig.11b

Fig.12b

Fig.12a

## Fig.14a

28

20

30

40

18

90

70

102

116

$M_1$

72

104

40c

$M_2$

V

40d

48

## Fig.14b

106

30 (d)

40 (c)

108

48

Fig.15a Fig.15b

(40) M₁ M₂ 22,30 M₂ M₁

M 110 22,30 114 (40) 22,30

110

Fig.16a Fig.16b

(40) M 22,30 M

112

Fig.17a Fig.17b